# EUROPEAN PATENT APPLICATION

(11) **EP 1 593 901 A1**
(43) Date of publication of application: **09.11.2005**
(21) Application number: 05076047.9
(22) Date of filing: 04.05.2005
(51) Int. Cl.: F16L 55/05

(54) **Device for damping a fluid flow**

(30) Priority: 05.05.2004 NL 1026118
(71) Applicant: Stork Prints B.V., 5831 AT Boxmeer (NL)
(72) Inventor: Ensing, Hendrik, 6971 HR Brummen (NL)
(74) Representative: 't Jong, Bastiaan Jacob

(57) **Abstract**

The invention relates to a device for damping a fluid flow such as an ink flow, which device comprises:
- a cylinder housing (2);
- a piston (3) movable in the cylinder housing between a first and second position and defining together with the cylinder housing a cylinder space;
- spring means (4) for urging the piston into the first position;
- a feed opening (5) and discharge opening (6) arranged in the cylinder housing and debouching onto the cylinder space,
wherein an overflow opening (10) is arranged in the cylinder housing under the piston and wherein a bypass channel connecting the cylinder space to the overflow opening (9) is arranged between the movable piston and the cylinder housing.

## Description

The invention relates to a device for damping fluctuations in a fluid flow such as an ink flow.

In for instance dispensing devices for making up a chosen colour from a number of basic colours, a determined quantity of each standard colour is dispensed into a container, whereafter the whole is mixed, thereby creating the desired chosen colour. Normally used in such dispensing devices are air-driven pumps which pump the fluid for dispensing by means of a reciprocating stroke. This reciprocating stroke creates pressure fluctuations in the outlet conduit of the pump. In the dispensing of this fluid under pressure these pressure fluctuations represent problems for accurate dispensing. In the prior art a damper is therefore arranged in the conduit which compensates these pressure fluctuations.

A known damper comprises a housing in which a compressible body is received. The housing is accommodated in the conduit in which the fluid flow for damping is present, and the compressible body ensures that the pressure fluctuations are compensated. The drawback of such a damper is however that the damping characteristic cannot be readily modified when another fluid with a different viscosity is selected.

It is now an object of the invention to provide a simple damping device which can be readily modified to the fluid flow for damping.

This object is achieved with a device which comprises:
- a cylinder housing;
- a piston movable in the cylinder housing between a first and second position and defining together with the cylinder housing a cylinder space;
- spring means for urging the piston into the first position;
- a feed opening and discharge opening arranged in the cylinder housing and debouching onto the cylinder space, wherein an overflow opening is arranged in the cylinder housing under the piston and wherein a bypass channel connecting the cylinder space to the overflow opening is arranged between the movable piston and the cylinder housing. Because part of the fluid leaks along the piston there results under the piston a vapour of this fluid, whereby fluid left behind on the cylinder wall will either not dry very quickly or will not dry at all. The leaking fluid can be fed back via the overflow opening to a supply vessel. Using the spring means the damping device can be readily modified to the fluid for damping.

In a preferred embodiment the bypass channel is formed by a gap between the piston and the cylinder housing. Fluid can hereby flow away around the whole piston, whereby fresh fluid flows along the piston continuously and whereby there is no possibility of the fluid drying on the piston wall, whereby the piston could become jammed. Furthermore, because a gap is formed between the piston and the cylinder housing the clearance is such that the operation of the damping device is not adversely affected when there are contaminants in the fluid.

In another embodiment of the device according to the invention, the feed opening and the discharge opening lie opposite each other. The fluid flow is hereby carried in any case wholly through the cylinder space, whereby the damping device responds better to variations in pressure.

In a preferred embodiment of the device according to the invention, a deflection surface is arranged in the cylinder space between the feed opening and the discharge opening. The fluid flow is hereby forced to pass through the cylinder space and not flow directly from the feed opening to the discharge opening. The response characteristic of the damper is hereby also improved.

In another preferred embodiment of the device according to the invention, the wall of the cylinder housing is offset in the area of the second position of the piston. It thus becomes possible to have the damping device also function as flushing device. By closing the discharge opening of the device and increasing the pressure in the fluid flow supplied via the feed opening the piston is urged to the second position, whereby the fluid can flow away easily through the offset part in the cylinder housing via the overflow opening. It is thus possible to flush a system of supply vessel, pump and a damping device according to the invention.

In a further preferred embodiment of the device according to the invention, the piston is open on the top side and the piston comprises openings in the side wall which debouch into the offset part of the cylinder housing in the area of the second position and are in fluid communication with the overflow opening.

The quantity of fluid per unit of time which can be flushed in the second position via the overflow opening is hereby increased.

The invention further comprises a dispensing device, comprising:
- a supply vessel with a fluid such as an ink;
- an air-driven pump with a suction conduit which extends into the supply vessel, a discharge conduit for the fluid and a compressed air line for driving the pump;
- a damping device according to the invention arranged in the discharge conduit, wherein the overflow opening debouches in the supply vessel; and
- a dispensing head arranged on the discharge conduit for dispensing the fluid.

Such a dispensing device according to the invention has the advantage of being relatively simple. The advantage is that only a single discharge conduit leads to the dispensing head and that there is no return line, as is usual to thus enable flushing of the system. With the damping device according to the invention, wherein a part of the fluid already leaks along the piston, such a flushing is no longer necessary. In the embodiment wherein a gap is arranged in the damping device between the piston and the housing, or in the embodiment wherein the cylinder housing has an offset part, flushing can take place very easily by closing the dispensing head and having the pump produce a high pressure.

In a preferred embodiment of a dispensing device according to the invention, a throttle device is arranged in the compressed air line. With this throttle device the flow rate of the compressed air can be limited, whereby the speed of the pump can be regulated and whereby the pressure in the fluid can remain limited.

In a preferred embodiment there are arranged in the compressed air line at least two throttle devices linkable in the line. The pump can thus be regulated, and thereby the flow rate of the fluid for pumping, thereby enabling accurate dispensing.

These and other features of the invention are further elucidated with reference to the accompanying drawings.

Figure 1 shows a cross-sectional view of a damping device according to the invention.

Figure 2 shows a schematic view of a dispensing device according to the invention.

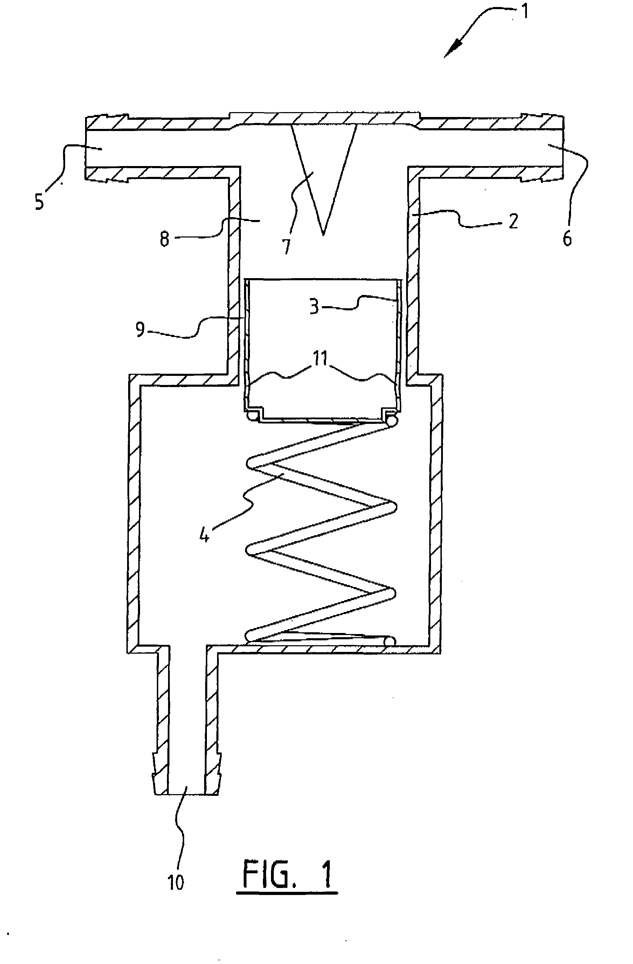

Figure 1 shows a cross-sectional view of a damping device 1 according to the invention. This damping device 1 has a cylinder housing 2 in which a piston 3 is movable up and downward. Piston 3 is urged upward by a spiral spring 4.

In cylinder housing 2 is arranged a feed opening 5, and opposite this a discharge opening 6. A deflection surface 7 is arranged between feed opening 5 and discharge opening 6 whereby the fluid flow, which enters cylinder space 8 via feed opening 5, is directed downward and can thus provide an optimum back pressure on piston 3. Provided between piston 3 and cylinder housing 2 is a gap 9 along which fluid can pass below piston 3 and can flow away via overflow opening 10.

In order to simplify flushing of a system in which damping device 1 is arranged, cylinder housing 2 is offset on the underside, piston 3 is open at the top and openings 11 are provided. When the fluid pressure is now increased and discharge opening 6 closed, piston 3 is then pressed downward so that openings 11 move into the area of the offset part of cylinder housing 2 and whereby the fluid can easily flow through to overflow opening 10. It is thus possible to flush the system.

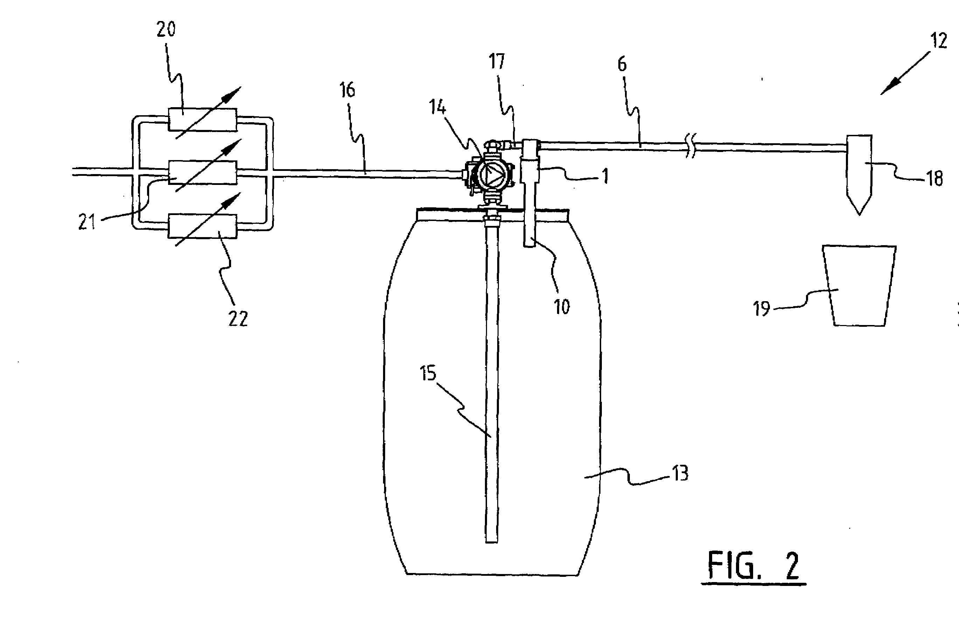

Figure 2 shows a schematic view of a dispensing device 12. This dispensing device 12 has a supply vessel 13 on which is arranged a pump 14. Pump 14 draws fluid out of supply vessel 13 via a suction pipe 15. Pump 14 is driven by a compressed air line 16. A damping device 1 as according to figure 1 is arranged in outlet conduit 17 of pump 14. A line leading to a dispensing head 18 is connected to the discharge opening of damping device 1. Because damping device 1 can also be used to flush the system, only one line to dispensing head 18 is necessary and not, as is usual in the prior art, a second return line, whereby the cost of such a dispensing device can be reduced. Fluid delivered by dispensing head 18 is collected in a container 19.

To enable control of pump 14, and thereby also the quantity delivered by dispensing head 18, three throttle devices 20, 21, 22, which can be switched on and off as desired, are arranged in the compressed air line 16. Throttle devices 20, 21, 22 preferably have a throttling action in the ratio 1:2:4, whereby it is possible to drive the pump 14 in seven different positions. A high pressure can thus be applied to pump 14 by switching on all three throttle devices, whereby a large amount of fluid is pumped to dispensing head 18. A first rough amount can hereby be dispensed into container 19. The throttle devices can then be switched off in stages, whereby the quantity of fluid delivered is likewise decreased in stages, and whereby precise dispensing to the gram is possible.

## Claims

1. Device for damping a fluid flow such as an ink flow, which device comprises:
- a cylinder housing;
- a piston movable in the cylinder housing between a first and second position and defining together with the cylinder housing a cylinder space;
- spring means for urging the piston into the first position;
- a feed opening and discharge opening arranged in the cylinder housing and debouching onto the cylinder space,
wherein an overflow opening is arranged in the cylinder housing under the piston and wherein a bypass channel connecting the cylinder space to the overflow opening is arranged between the movable piston and the cylinder housing.

2. Device as claimed in claim 1, wherein the bypass channel is formed by a gap between the piston and the cylinder housing.

3. Device as claimed in claim 1 or 2, wherein the feed opening and the discharge opening lie opposite each other.

4. Device as claimed in claim 3, wherein a deflection surface is arranged in the cylinder space between the feed opening and the discharge opening.

5. Device as claimed in any of the foregoing claims, wherein the wall of the cylinder housing is offset in the area of the second position of the piston.

6. Device as claimed in claim 5, wherein the piston is open on the top side and the piston comprises openings in the side wall which debouch in the offset part of the cylinder housing in the area of the second position and are in fluid communication with the overflow opening.

7. Dispensing device, comprising:
- a supply vessel with a fluid such as an ink;
- an air-driven pump with a suction conduit which extends into the supply vessel, a discharge conduit for the fluid and a compressed air line for driving the pump;
- a damping device as claimed in any of the foregoing claims arranged in the discharge conduit, wherein the overflow opening debouches in the supply vessel; and
- a dispensing head arranged on the discharge conduit for dispensing the fluid.

8. Dispensing device as claimed in claim 7,
wherein a throttle device is arranged in the compressed air line.

9. Dispensing device as claimed in claim 8,
wherein there are arranged in the compressed air line at least two throttle devices linkable in the line.
